(19) Europäisches Patentamt
European Patent Office
Office européen des brevets

(11) **EP 3 447 595 B1**

(12) **EUROPEAN PATENT SPECIFICATION**

(45) Date of publication and mention
of the grant of the patent:
**05.10.2022 Bulletin 2022/40**

(51) International Patent Classification (IPC):
**G05B 23/02** (2006.01)

(21) Application number: **17187406.8**

(52) Cooperative Patent Classification (CPC):
**G05B 23/0275**

(22) Date of filing: **23.08.2017**

(54) **METHOD FOR MONITORING AN INDUSTRIAL PLANT AND INDUSTRIAL CONTROL SYSTEM**

VERFAHREN ZUR ÜBERWACHUNG EINER INDUSTRIEANLAGE UND INDUSTRIELLES STEUERUNGSSYSTEM

PROCÉDÉ DE SURVEILLANCE D'UNE INSTALLATION INDUSTRIELLE ET SYSTÈME DE COMMANDE INDUSTRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.02.2019 Bulletin 2019/09**

(73) Proprietor: **ABB Schweiz AG**
**5400 Baden (CH)**

(72) Inventors:
• **Chioua, Moncef**
**Montreal QC H2S 0B6 (CA)**
• **Lucke, Matthieu**
**69120 Heidelberg (DE)**
• **Hollender, Martin**
**69221 Dossenheim (DE)**
• **Li, Nuo**
**68167 Mannheim (DE)**
• **Bauer, Reinhard**
**69126 Heidelberg (DE)**
• **Harjunkoski, Iiro**
**69469 Weinheim (DE)**

(74) Representative: **Zimmermann & Partner**
**Patentanwälte mbB**
**Postfach 330 920**
**80069 München (DE)**

(56) References cited:
**EP-A1- 3 026 518      US-A1- 2014 097 952**

• **MELHEM MARIAM ET AL: "Analysis of similarities between alarm events in the semiconductor manufacturing process", 2017 25TH MEDITERRANEAN CONFERENCE ON CONTROL AND AUTOMATION (MED), IEEE, 3 July 2017 (2017-07-03), pages 888-894, XP033125131, DOI: 10.1109/MED.2017.7984232**
• **YAN LIU ET AL: "Sequential Proximity-Based Clustering for Telecommunication Network Alarm Correlation", 24 September 2008 (2008-09-24), ADVANCES IN NEURAL NETWORKS - ISNN 2008; [LECTURE NOTES IN COMPUTER SCIENCE], SPRINGER BERLIN HEIDELBERG, BERLIN, HEIDELBERG, PAGE(S) 30 - 39, XP019106946, ISBN: 978-3-540-87733-2**
• **KONDAVEETI SANDEEP ET AL: "An application for automated reporting of industrial alarm system performance", PROCEEDING OF THE 11TH WORLD CONGRESS ON INTELLIGENT CONTROL AND AUTOMATION, IEEE, 29 June 2014 (2014-06-29), pages 480-484, XP032742681, DOI: 10.1109/WCICA.2014.7052760**

EP 3 447 595 B1

**Description**

Aspects of the invention relate to a method for monitoring an industrial plant, in particular to a method for classifying an abnormal episode in an industrial plant. Further aspects relate to an industrial control system.

Technical background:

In operation of industrial plants, alarms are a known methodology to indicate a required action to an operator. For example, when a tank level reaches a certain limit, a high alarm is raised that shows that the tank reached a high level. According to the equipment that sends the alarm and the message text that is shown to the operator in an alarm list, the operator can act accordingly and, for example, open a valve and start a pump to decrease the level inside the tank.

When an alarm appears, it is usually visualized in an alarm list. Additionally, in some cases the alarm is also visualized in the human machine interface directly at a component of the industrial plant. The operator has now the chance to react on those alarms.

Alarms and events can become crucial for the operation of today's highly integrated complex industrial, specifically process and manufacturing, plants. Alarms can be used to indicate to the operator occurrences of faulty and dangerous states of the process that may be needed to be identified in order to react accordingly and steer the process back into a normal state. Once the industrial control system has been commissioned and is operating the plant, it can display alarms according to the rules implemented in the process control environment. Since many items in the plant are able to generate alarms that are displayed in the common manner to the operator, it can be the case that a single cause leads to several alarms originating from different system components. Those alarms can propagate very quickly through the process and might lead to episodes of high alarm rates commonly called "alarm floods" in the process and power generation industry. Alarm floods have been a contributing factor to several industrial accidents (e.g. Milford Haven 1994) and industry guidelines like ISA 18.2 recommend limiting alarm rates to a maximum of 10 alarms in 10 minutes intervals.

That is, an alarm is followed by several consequential alarms. Such a sequence of consequential alarms can be considered as an abnormal event. Analysis of abnormal events based on alarm data is a research area that emerged recently. With such an approach, abnormal events are characterized as alarm floods and the analysis has been focused on the comparison between their alarm sequences. (see Cheng, Y., Izadi, I., & Chen, T. (2013): Pattern matching of alarm flood sequences by a modified Smith-Waterman algorithm; Chemical Engineering Research and Design, 91(6), 1085-1094) proposed to use the modified Smith-Waterman algorithm to assess the similarity of two alarm flood sequences. Lai, S. & Chen, T., 2015: A method for pattern mining in multiple alarm flood sequences; Chemical Engineering Research and Design, extended the algorithms to the similarity analysis of multiple alarm flood sequences. Hu, W., Wang, J. & Chen, T., 2016: A local alignment approach to similarity analysis of industrial alarm flood sequences; Control Engineering Practice, 55, pp.13-25, suggested a new method to improve the algorithm proposed in with regard to computational requirements, introducing a "priority-based similarity scoring strategy, a set-based pre-matching mechanism and a modified seed-extending steps".

Document EP 3 026 518 A1 describes a method for Root analysis fo an alarm flood sequence. The grouping of alarm flood sequences using a modified Smith Waterman algorithm is described.

Thus, there is a need for an improved method for monitoring an industrial plant and an improved industrial control system that overcomes at least some of the problems of the art.

Summary of the invention

In view of the above, a method for monitoring an industrial plant according to claim 1, and a industrial control system according to claim 12 are provided.

According to an aspect, method for monitoring an industrial plant is provided. The method includes: identifying an abnormal episode based on an alarm log; extracting abnormal events from the alarm log, the abnormal events being associated with the abnormal episode; computing from the extracted abnormal events an alarm correlation map describing correlations between the extracted abnormal events; and classifying the abnormal episode using the alarm correlation map.

According to a further aspect, an industrial control system is provided. The industrial control system includes an alarm module configured for identifying an abnormal episode based on an alarm log; a processing unit configured for extracting abnormal events from the alarm log, the abnormal events being associated with the abnormal episode; and computing from the extracted abnormal events an alarm correlation map describing correlations between the extracted abnormal events; and a classifier for classifying the abnormal episode using the alarm correlation map.

Further advantages, features, aspects and details that can be combined with embodiments described herein are evident from the dependent claims, the description and the drawings.

Brief description of the Figures:

The details will be described in the following with reference to the figures, wherein

Fig. 1    is a schematic view of an industrial plant;

Fig. 2    is a schematic view of an industrial control system according to embodiments; and

Fig. 3    is flow diagram of a method for monitoring an industrial plant according to embodiments.

Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

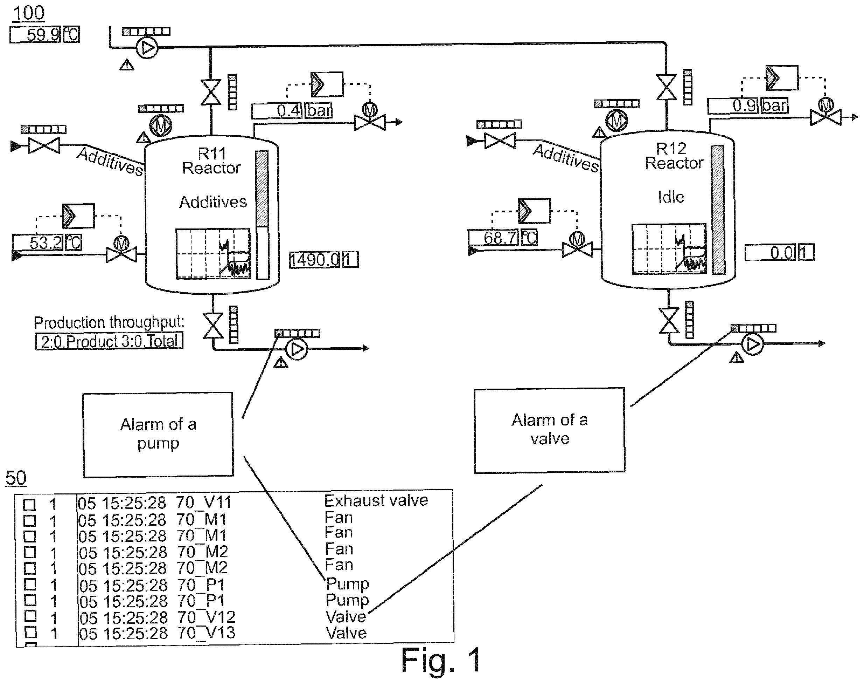

Fig. 1 shows an industrial plant 100 and an alarm log 50. The industrial plant 100 includes at least on system component, such as the first reactor R11, the second reactor R12, pipes that are connected to the at least one of the first reactor R11 and second reactor R12, valves in the pipes, pumps connected to the pipes etc. An error can occur in each of the system components. The errors can be logged in the alarm log 50. Further, the alarm can be visualized in a human machine interface provided at the respective system component.

In the example of Fig. 1, an alarm is followed by several consequential alarms. In the example of Fig. 1, nearly all system components used to control the two reactors R11. R12 raised alarms, although the pump in the upper left part may be the root-cause for the problem. However, the root-cause for the problem may not be easily identified from the alarm log.

That is, an alarm flood can be the result of an abnormality propagating in the process through material/energy/control connections. Further, similar alarm flood sequences can originate from the same root cause. In view thereof, the present application can support the management of abnormal process plant situations by identifying the type of the encountered alarm flood and therefore the associated root cause.

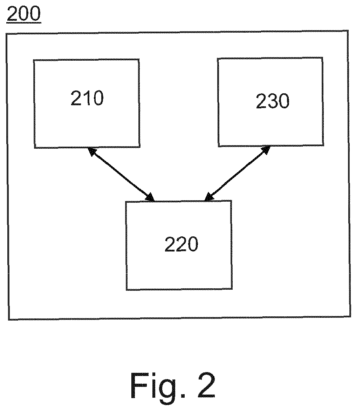

Fig. 2 shows industrial control system 200. The industrial control system may be provided in the industrial plant 100 and/or can be connected to the industrial plant 100. The industrial control system 200 can include an alarm module 210, a processing unit 220 and a classifier 230.

The alarm module 210 can be configured for storing alarms in an alarm log 50. Accordingly, whenever an alarm is raised or triggered by a system component of the industrial plant 100, the alarm can be stored in the alarm log 50. Specifically, the alarm can be stored together with alarm information associated with the alarm. The alarm information can include date and/or time of the alarm, system component raising the alarm etc.

The processing unit 220 can be configured for identifying an abnormal episode based on the alarm log 50. Accordingly, the processing unit 220 can analyses the alarm log 50 and determine that an abnormal episode occurred. Specifically, the alarm module 210 can determine that an abnormal episode occurred between a first point in time or a first error and a second point in time or a second error. In the context of the present disclosure, an "abnormal episode", such as the abnormal episode identified in the alarm log 50, may be understood as an episode of the alarm log or in time, in which more alarms than normal have been raised.

The processing unit 220 can be configured for extracting abnormal events from the alarm log 50. The abnormal events can be associated with the abnormal episode. Specifically, the abnormal events can be associated with specific sequences of alarm. In the context of the present disclosure, an "abnormal event", such as the abnormal events extracted from the alarm logs 50 can be understood as a specific sequence of alarms. The sequence can be specific in view of the time and/or date of the alarm and/or the system component raising the alarm.

The processing unit 220 can be configured for computing an alarm correlation map from the extracted abnormal events. The alarm correlation map may describe correlations between the extracted abnormal events.

The classifier 230 can be configured for classifying the abnormal episode using the alarm correlation map. Accordingly, the type of the encountered alarm flood occurring in the abnormal event can be identified. Thus, the classifier 230 can assign at least one root-cause to the abnormal episode.

The present application thus can provide a method for evaluating, grouping and classifying abnormal process episodes using readily available process information, specifically the historical process alarm logs and/or historical process measurements. Further, the present application can be used for identifying abnormal process episodes and/or in conjunction with predefined fault templates to achieve the root cause analysis and/or the diagnostic of the encountered abnormal process episodes.

Accordingly, the present application provides methods and systems that are able to learn patterns related to abnormal situations encountered in the past and to use this learning to identify a given abnormal situation within the set learned from the past process behavior. The application may represent the signature of each abnormal process event by an alarm similarity color map (see Yang, F., Shah, S. L., Xiao, D., & Chen, T. (2012): Improved correlation analysis and visualization of industrial alarm data; ISA Transactions, 51, 499-506

The main added-value of the proposed approach compared to the traditional sequence alignment methods for alarm flood similarity analysis (see Cheng et. al. 2013 above), is its simplicity. The computation requirements for the correlation maps are lower than those for the sequence alignment methods, and therefore relevant for online implementations.

Further, using a correlation map as a classification features offers the advantage of a straightforward integration of process measurements and process alarms.

The identification of an abnormal episode can be done based on the alarm logs 50 following the approach presented in Rodrigo, V., Chioua, M., Hagglund, T., & Hollender, M. (2016): Causal analysis for alarm flood reduction; IFAC-PapersOnLine, 49(7), 723-728

According to embodiments described herein, chattering alarms can be removed, specifically based on an evaluation of a time elapsed between two occurrences of alarms of the same type (see Ahmed, K., Izadi, I., Chen, T., Joe, D., & Burton, T. (2013): Similarity analysis of industrial alarm flood data; IEEE Transactions on Automation Science and Engineering, 10(2), 452-457

). The evaluation of time elapsed between two occurrences of alarms of the same type may include a measurement of the time elapsed between two occurrences of alarms of the same type and/or determine a frequency between two or more occurrences of alarms of the same type.

Next, an abnormal episode or abnormal process episode can be taken as an alarm flood episode. According to embodiments described herein, an abnormal episode can correspond to an interval with an alarm activation frequency of equal to or greater than a given number of alarms in a given period of time. For instance, an abnormal episode can be an interval with an alarm activation frequency of ten alarms per ten minutes or more.

Further, an abnormal event can be defined by a given alarm sequence and/or can belong to a certain class. The next process can include a transformation of these sequences into correlation maps to be used as features for the classification. Alarm correlation maps have been proposed for the visualization and alarm rationalisation in Kondaveeti, S. R., Izadi, I., Shah, S. L., Black, T., & Chen, T. (2012): Graphical tools for routine assessment of industrial alarm systems; Computers and Chemical Engineering, 46, 39-47

, and Yang, F., Shah, S. L., Xiao, D., & Chen, T. (2012): Improved correlation analysis and visualization of industrial alarm data; ISA Transactions, 51, 499-506 Contents, 2012 suggests computing the alarms correlation map based on the Jaccard similarity index on alarm signals taking into account only the alarm activations.

Further, a pseudo-signal for each type of alarm can be introduced. Use of a pseudo-signal for a method that is intended to be implemented online at a plant-wide level may raise computational issues. According to embodiments described herein, an alarm is a binary signal. Specifically, an alarm signal can be 1 when the alarm is activated, and/or 0 otherwise.

According to embodiments, a similarity measure is used for computing the maps. For instance, a Jaccard similarity index $S_{jac}(X,Y)$ (see Lesot, M. J., Rifqi, M., & Benhadda, H. (2009): Similarity measures for binary and numerical data: a survey; International Journal of Knowledge Engineering and Soft Data Paradigms, I(1), 63) can used for the correlation. The Jaccard similarity index $S_{jac}(X,Y)$ can be written as follows:

$$S_{jac}(X,Y) = \max_{l \in L}\left(\frac{a(l)}{a(l)+b(l)+c(l)}\right)$$

where $a(l)$ can be the number of samples, where $x_i = 1$ and $y_{i+l} = 1$, $b(l)$ can be the number of samples where $x_i = 1$ and $y_{i+l} = 0$, and $c(l)$ can be the number of samples where $x_i = 0$ and $y_{i+l} = 1$. The set of lags L can be chosen according to the dynamics of the process. An autocorrelation of an alarm signal can set to one if the alarm is activated at some point during the time interval, and/or to zero otherwise.

According to embodiments, the alarm correlation map can be computed over the whole duration of the abnormal episode. Further, the alarm correlation map can cover all the alarms available in the area of the industrial plant under analysis. An ordering of the alarms can be chosen arbitrarily. According to embodiments described herein, the order of the alarms is identical for all computed maps, when more than one alarm correlation map is computed. Moreover, computing the alarm correlation maps can include ordering the alarms in rows and columns

Further, other types of similarity measures can be used in alternative to Jaccard similarity index $S_{jac}$ (*X,Y*), including the ones described in Yang, Z., Wang, J., & Chen, T. (2013).

Detection of correlated alarms based on similarity coefficients of binary data. IEEE Transactions on Automation Science and Engineering , such as:

$$\text{Simple M. coefficient: } \frac{C+C_0}{N_1+N_2+C_0-C},$$

$$\text{Dice coefficient: } \frac{2C}{N_1+N_2},$$

$$\text{First Kulcz. coefficient: } \frac{C}{N_1+N_2-2C},$$

and/or

$$\text{Second Kulcz. coefficient: } \frac{C(N_1+N_2)}{N_1+N_2-2C},$$

Where N can be a data length of the two sequences; $N_1$ a number of '1's in the first sequence; $N_2$ a number of '1's in the second sequence; $C_0$ a number of '0' appeared simultaneously in both sequences; C a number of '1's appeared simultaneously in both sequences.

Another alternative could be to convert the alarm binary signals to pseudo signals using a transformation such as the one described in Yang, F., Shah, S. L., Xiao, D., & Chen, T. (2012): Improved correlation analysis and visualization of industrial alarm data; ISA Transactions, 51, 499-506 Contents
, specifically in order to use signals correlation coefficient such as Pearson, Kendall and/or Spearman correlation coefficient. Further, alarm signals can be generated using activations and deactivations. Furthermore, different levels (HI/LO/HH/LL) for alarms of the same type can be merged into one signal. A pseudo-signal can be then introduced, e.g. using a Gaussian kernel method. A cross-correlation function can be used for the correlation.

According to embodiments described herein, the processing unit 220 can be configured for computing a process correlation map on basis of process signals indicating a process status of the apparatus. The process correlation map can be computed using, e.g., a Pearson correlation coefficient *r* (*X,Y*) for each pair of process measurements:

$$r\ (X,Y) = \frac{\sum_{i=1}^{n}(x_i-\bar{x})(y_i-\bar{y})}{\sqrt{\sum_{i=1}^{n}(x_i-\bar{x})^2}\ \sqrt{\sum_{i=1}^{n}(y_i-\bar{y})^2}},$$

where $\bar{x}$ can be the sample mean.

Further, other rank correlation coefficients can be used, such as Spearman and/or Kendall.

$$\text{Kendall rank correlation coefficient: } \tau = \frac{n_c-n_d}{\frac{1}{2}n(n-1)},$$

Where $n_c$ can be the number of concordant pairs, $n_d$ can be the number of discordant pairs.

Any pair of observations $(x_i, y_i)$ and $(x_j, y_j)$ where $i \neq j$ can be said to be concordant if the ranks for both elements (i.e. the sort order by *x* and by ) agree. That is, if both $x_i > x_j$ and $y_i > y_j$; or if both $x_i < x_j$ and $y_i < y_j$. They can be said to be discordant if $x_i > x_j$ and $y_i < y_j$; or if both $x_i < x_j$ and $y_i > y_j$ . If $x_i = x_j$ or $y_i = y_j$ the pair is neither concordant nor discordant.

$$\text{Spearman's rank correlation coefficient: } r_s = \frac{cov(rg_X, rg_Y)}{\sigma_{rg_X}\,\sigma_{rg_Y}},$$

where $rg_X$, $rg_Y$ can be ranked variables of $X$ and $Y$.

According to embodiments described hereon, the process correlation map can be computed over the whole duration of the abnormal episode. Further, the process correlation map cover all the signals corresponding to the alarms available in the area of the plant under analysis. Further, the ordering of the signals can be chosen arbitrarily. According to embodiments described herein, the ordering of the signals can be identical for all computed maps when more than one process correlation map is computed.

According to embodiments described herein, the abnormal episode can be classified on basis of the alarm correlation map and/or the process correlation map separately. This approach can lead to two classification decision, i.e. one for the alarm correlation map and one for the process correlation map. The classification decisions then can be fused e.g. using weights based on classification confidence values.

Additionally or alternatively, the processing unit 220 can be configured for merging the alarm correlation map and process correlation map into a merged correlation map. That is, this approach first computes a merged correlation map using both the process alarms and the process measurements. For instance, the alarm correlation coefficients can be computed using a Jaccard similarity index (or alternative coefficients described herein). The measurements correlation coefficients can be computed using a Pearson correlation coefficient or alternative correlation coefficient used for process as described herein.

According to embodiments described herein, the processing unit 220 can be configured for obtaining alarm-process-correlations from the merged correlation map. For instance, cross terms can be computed using a Point-biserial correlation coefficient:

$$r_{pb}(X,Y) = \frac{M_1 - M_0}{s_n} \sqrt{\frac{n_1 \, n_0}{n^2}},$$

where X can be the process signal and Y can be the binary alarm signal; $s_n$ can be the standard deviation of X; $M_1$ can be the mean value of X when Y is equal to 1; $M_0$ can be the mean value of X when Y is equal to 0; $n_1$ can be the number of data points where Y is equal to 1; $n_0$ can be the number of data points where Y is equal to 0.

The classifier can be configured for classifying the abnormal episode using the alarm correlation map, the process correlation maps and/or the merged correlation map.

According to embodiments described herein, classifying the abnormal episode can include applying a labelling to the abnormal episode. The labelling can be done manually based on the process operators' knowledge of each subsequent alarm sequence. According to embodiments described herein, the abnormal events can be clustered. Specifically, the alarm sequences related to different abnormal events can be automatically clustered, e.g. using a modified Smith-Waterman algorithm (see Cheng, Y., Izadi, I., & Chen, T. (2013): Pattern matching of alarm flood sequences by a modified Smith-Waterman algorithm; Chemical Engineering Research and Design, 91(6), 1085-1094. ). According to embodiments described herein, clustering the abnormal events can be unsupervised. Further, the obtained clusters can be manually validated.

The classification problem can be one with a relatively small number of points, i.e. the number of abnormal events to classify can be small. Therefore, a linear classifier can be beneficial. For instance, a support vector machine can be used. The correlation map (the alarm correlation map, the process correlation map and/or the merged correlation map) can be stretched into column vectors and fed to the classifier 230. A one-vs-one approach can be chosen for multiclass support. For each binary classification problem, the support vector machine can solve the problem described in Cortes, C., & Vapnik, V. (1995): Support Vector Networks. Machine Learning, 20(3), 273~-~297 . Further, a k-fold cross validation can be used for the setting the kernel function and hyper parameters.

Furthermore, other types of classification algorithms can be used for classifying the abnormal episode using: K-nearest neighbours, random forests and/or artificial neural networks.

Moreover, based on the classification, a fault diagnosis may be looked up. The fault diagnosis can be used for repair of the industrial plant 100.

According to embodiments described herein, the classifier 230 can be trained using historical data. For instance, the classifier 230 can be trained using old alarm logs.

According to embodiments described herein, the industrial control system and/or any of its components may further comprise a network interface for connecting the industrial control system and/or any of its components to a data network, in particular a global data network. The data network may be a TCP/IP network such as Internet. The industrial control system and/or any of its components can be operatively connected to the network interface for carrying out commands received from the data network. The commands may include a control command for controlling the industrial control system and/or any of its components to carry out a task such as start or stop operation. In this case, the industrial control system and/or any of its components can be adapted for carrying out the task in response to the control command. The commands may include a status request. In response to the status request, or without prior status request, the industrial control system and/or any of its components may be adapted for sending a status information to the network interface, and the network interface is then adapted for sending the status information over the network. The commands may include an update command including update data. In this case, the industrial control system and/or any of its components can be adapted for initiating an update in response to the update command and using the update data.

The data network may be an Ethernet network using TCP/IP such as LAN, WAN or Internet. The data network may comprise distributed storage units such as Cloud. Depending on the application, the Cloud can be in form of public, private, hybrid or community Cloud.

According to a further aspect, the industrial control system and/or any of its components further comprises a network interface for connecting the device to a network, wherein the network interface is configured to transceive digital signal/data between the industrial control system and/or any of its components and the data network, wherein the digital signal/data include operational command and/or information about the device or the network.

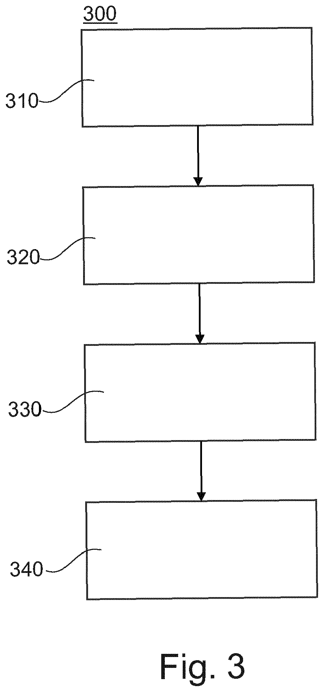

Fig. 3 shows a method 300 for monitoring an industrial plant 100. In block 310, an abnormal episode based on an alarm log 50 can be identified. In block 320, abnormal events can be extracted from the alarm log 50. The abnormal events can be associated with the abnormal episode. In block 330, from the extracted abnormal events an alarm correlation map describing correlations between the extracted abnormal events can be computed. In block 340, the abnormal episode can be classified using the alarm correlation map.

When practicing embodiments, operator effectiveness, ease of engineering and efficient alarm grouping, and/or categorization and evaluation of alarm burst can be improved. The methods described herein may be hardware and subsystem independent. In particular, the present application can be applied to all segments of the process- and manufacturing industries, such as Oil & Gas.

As outlined herein, the present application can automatically identify abnormal situations encountered by an industrial process system based on alarm measurements and/or the process variable measurements. The present application may provide one or more of the following benefits:

1. The type of abnormal episode encountered by a process can be directly seen by the operators with a recommended corrective action learned offline. When practicing embodiments, operator effectiveness can be increased.

2. Identifying the type of abnormal episodes encountered by a process earlier may reduce downtime due to too late reaction of the operator.

3. Expensive high performance hardware and models may be not required, since the present application may provide a purely data driven approach.

4. The present application can readily be applied to process plant, without the need for adapting the hardware or OPC A&E server

5. The amount of required engineering can be reduced.

## Claims

1. A method for monitoring an industrial plant, the method comprising:

identifying an abnormal episode based on an alarm log (50), wherein alarms are stored in the alarm log together with alarm information associated with the alarm, wherein the alarm is a binary signal, and wherein an abnormal episode corresponds to an interval with an alarm activation frequency of equal to or greater than a given number of alarms in a given period of time;
extracting abnormal events from the alarm log (50), the abnormal events being associated with the abnormal episode, wherein an abnormal event corresponds to a given alarm sequence;
computing from the extracted abnormal events an alarm correlation map describing correlations between the extracted abnormal events; and
classifying the abnormal episode using the alarm correlation map, wherein
computing the alarm correlation map comprises using a similarity measure, wherein the similarity measure is at least one selected from the group consisting of:

- a Jaccard similarity index;
- a Simple M. coefficient;
- a Dice coefficient;

- a First Kulcz. coefficient; and
- a Second Kulcz. coefficient.

2. The method according to claim 1, further comprising:
removing chattering alarms.

3. The method according to claim 2, wherein the chattering alarms are removed before identifying the abnormal episodes based on alarm logs.

4. The method according to claim 2 or 3, wherein chattering alarms are removed on basis of a time elapsed between two occurrences of alarms of the same type.

5. The method according to any one of the preceding claims, wherein computing the alarm correlation maps includes ordering the alarms in rows and columns.

6. The method according to any one of the preceding claims, further comprising:

computing a process correlation map on basis of process signals indicating a process status of an apparatus; merging the alarm correlation map and process correlation map into a merged correlation map.

7. The method according to claim 6, further comprising:
obtaining alarm-process-correlations from the merged correlation map.

8. The method according to any one of the preceding claims, further comprising:
clustering the abnormal events.

9. The method according to any one of the preceding claims, wherein classifying the abnormal episodes is done using a linear classifier.

10. The method according to any one of the preceding claims, wherein classifying the abnormal episodes is done using a support vector machine.

11. The method according to any one of the preceding claims, wherein a fault diagnosis is looked up on basis of the classification.

12. An industrial control system (200), comprising

an alarm module (210) configured for storing alarms in an alarm log (50) together with alarm information associated with the alarms, wherein the alarm is a binary signal;
a processing unit (220) configured for

identifying an abnormal episode based on the alarm log (50), wherein an abnormal episode corresponds to an interval with an alarm activation frequency of equal to or greater than a given number of alarms in a given period of time,
extracting abnormal events from the alarm log (50), the abnormal events being associated with the abnormal episode, wherein an abnormal event corresponds to a given alarm sequence, and
computing from the extracted abnormal events an alarm correlation map describing correlations between the extracted abnormal events; and

a classifier (230) configured for classifying the abnormal episode using the alarm correlation map, wherein computing the alarm correlation map comprises using a similarity measure, wherein the similarity measure is at least one selected from the group consisting of:

- a Jaccard similarity index;
- a Simple M. coefficient;
- a Dice coefficient;
- a First Kulcz. coefficient; and
- a Second Kulcz. coefficient.

**13.** The industrial control system according to claim 12, wherein the classifier (230) is trained using historical data.

**14.** The industrial control system according to claim 12 or 13, further comprising a network interface for connecting the industrial control system to a data network, wherein the industrial control system is operatively connected to the network interface for at least one of carrying out a command received from the data network and sending device status information to the data network.

**Patentansprüche**

**1.** Verfahren zum Überwachen einer industriellen Anlage, wobei das Verfahren Folgendes umfasst:

Identifizieren einer anomalen Episode anhand eines Alarmprotokolls (50), wobei Alarme in dem Alarmprotokoll zusammen mit Alarminformationen, die dem Alarm zugeordnet sind, gespeichert sind, wobei der Alarm ein binäres Signal ist und wobei eine anomale Episode einem Intervall, in dem eine Alarmaktivierungshäufigkeit gleich oder größer als eine gegebene Anzahl von Alarme in einer gegebenen Zeitperiode ist, entspricht;
Extrahieren anomaler Ereignisse aus dem Alarmprotokoll (50), wobei die anomalen Ereignisse der anomalen Episode zugeordnet sind, wobei ein anomales Ereignis einer gegebenen Alarmfolge entspricht;
Berechnen aus den extrahierten anomalen Ereignissen eines Alarm-Korrelationskennfeldes, das Korrelationen zwischen den extrahierten anomalen Ereignissen beschreibt; und
Klassifizieren der anomalen Episode unter Verwendung des Alarm-Korrelationskennfeldes, wobei das Berechnen des Alarm-Korrelationskennfeldes die Nutzung eines Ähnlichkeitsmaßes umfasst, wobei das Ähnlichkeitsmaß wenigstens eines ist, das aus der Gruppe gewählt ist, die besteht aus:

- einem Jaccard-Ähnlichkeitsindex;
- einem Simple M.-Koeffizienten;
- einem Dice-Koeffizienten;
- einem ersten Kulcz.-Koeffizienten;
- einem zweiten Kulcz.-Koeffizienten.

**2.** Verfahren nach Anspruch 1, das ferner Folgendes umfasst:
Entfernen von Flatter-Alarmen.

**3.** Verfahren nach Anspruch 2, wobei die Flatter-Alarme entfernt werden, bevor die anomalen Episoden anhand von Alarmprotokollen identifiziert werden.

**4.** Verfahren nach Anspruch 2 oder 3, wobei die Flatter-Alarme auf der Grundlage einer Zeit, die zwischen zwei Auftritten von Alarmen desselben Typs verstreicht, entfernt werden.

**5.** Verfahren nach einem der vorhergehenden Ansprüche, wobei das Berechnen der Alarm-Korrelationskennfelder das Ordnen der Alarme in Zeilen und Spalten umfasst.

**6.** Verfahren nach einem der vorhergehenden Ansprüche, das ferner Folgendes umfasst:

Berechnen eines Prozess-Korrelationskennfeldes auf der Grundlage von Prozesssignalen, die einen Prozessstatus einer Vorrichtung angeben; und
Mischen des Alarm-Korrelationskennfeldes und des Prozesskorrelations-Kennfeldes zu einem gemischten Korrelationskennfeld.

**7.** Verfahren nach Anspruch 6, das ferner Folgendes umfasst:
Erhalten von Alarm/Prozess-Korrelationen aus dem gemischten Korrelationskennfeld.

**8.** Verfahren nach einem der vorhergehenden Ansprüche, das ferner Folgendes umfasst:
Bilden von Clustern der anomalen Ereignisse.

**9.** Verfahren nach einem der vorhergehenden Ansprüche, wobei das Klassifizieren der anomalen Episoden unter Verwendung eines linearen Klassifizierers erfolgt.

**10.** Verfahren nach einem der vorhergehenden Ansprüche, wobei das Klassifizieren der anomalen Episoden unter Verwendung einer Trägervektor-Maschine erfolgt.

**11.** Verfahren einem der vorhergehenden Ansprüche, wobei eine Fehlerdiagnose auf der Grundlage der Klassifikation nachgeschlagen wird.

**12.** Industrielles Steuersystem (200), das Folgendes umfasst:

ein Alarmmodul (210), das konfiguriert ist, Alarme in einem Alarmprotokoll (50) zusammen mit Alarminformationen, die den Alarmen zugeordnet sind, zu speichern, wobei der Alarm ein binäres Signal ist; eine Verarbeitungseinheit (220), die konfiguriert ist zum

Identifizieren einer anomalen Episode anhand des Alarmprotokolls (50), wobei eine anomale Episode einem Intervall mit einer Alarmaktivierungshäufigkeit, die gleich oder größer als eine gegebene Anzahl von Alarmen in einer gegebenen Zeitperiode ist, entspricht,
Extrahieren anomaler Ereignisse aus dem Alarmprotokoll (50), wobei die anomalen Ereignisse der anomalen Episode zugeordnet sind, wobei ein anomales Ereignis einer gegebenen Alarmfolge entspricht, und
Berechnen aus den extrahierten anomalen Ereignissen eines Alarm-Korrelationskennfeldes, das Korrelationen zwischen den extrahierten anomalen Ereignissen beschreibt; und

einen Klassifizierer (230), der konfiguriert ist, eine anomale Episode unter Verwendung des Alarm-Korrelationskennfeldes zu klassifizieren, wobei das Berechnen des Alarm-Korrelationskennfeldes die Nutzung eines Ähnlichkeitsmaßes umfasst, wobei das Ähnlichkeitsmaß wenigstens eines ist, das aus der Gruppe gewählt ist, die besteht aus:

- einem Jaccard-Ähnlichkeitsindex;
- einem Simple M.-Koeffizienten;
- einem Dice-Koeffizienten;
- einem ersten Kulcz.-Koeffizienten;
- einem zweiten Kulcz.-Koeffizienten.

**13.** Industrielles Steuersystem nach Anspruch 12, wobei der Klassifizierer (230) unter Verwendung historischer Daten trainiert wird.

**14.** Industrielles Steuersystem nach Anspruch 12 oder 13, das ferner eine Netzschnittstelle enthält, um das industrielle Steuersystem mit einem Datennetz zu verbinden, wobei das industrielle Steuersystem mit der Netzschnittstelle betriebstechnisch verbunden ist, um einen von dem Datennetz empfangenen Befehl auszuführen und/oder Vorrichtungsstatusinformationen an das Datennetz zu senden.

**Revendications**

**1.** Procédé de surveillance d'une installation industrielle, le procédé comprenant :

l'identification d'un épisode anormal d'après un journal d'alarmes (50), dans lequel des alarmes sont stockées dans le journal d'alarmes avec des informations d'alarme associées à l'alarme, l'alarme est un signal binaire et un épisode anormal correspond à un intervalle avec une fréquence d'activation d'alarmes égale ou supérieure à un nombre donné d'alarmes dans une période de temps donnée ;
l'extraction d'événements anormaux du journal d'alarmes (50), les événements anormaux étant associés à l'épisode anormal, un événement anormal correspondant à une séquence d'alarme donnée ;
le calcul à partir des événements anormaux extraits d'une carte de corrélations d'alarmes décrivant des corrélations entre les événements anormaux extraits ; et
la classification de l'épisode anormal à l'aide de la carte de corrélations d'alarmes, dans lequel
le calcul de la carte de corrélations d'alarmes comprend l'utilisation d'une mesure de similarité, la mesure de similarité étant au moins une mesure sélectionnée dans le groupe formé par :

- un indice de similarité de Jaccard ;
- un coefficient d'appariement simple ;

- un coefficient de Dice ;
- un premier coefficient Kulczynski ; et
- un second coefficient Kulczynski.

2. Procédé selon la revendication 1, comprenant en outre :
   la suppression d'alarmes de type cliquetis.

3. Procédé selon la revendication 2, dans lequel les alarmes de type cliquetis sont supprimées avant l'identification des épisodes anormaux d'après les journaux d'alarmes.

4. Procédé selon la revendication 2 ou 3, dans lequel les alarmes de type cliquetis sont supprimées sur la base d'un temps écoulé entre deux occurrences d'alarmes du même type.

5. Procédé selon l'une quelconque des revendications précédentes, dans lequel le calcul des cartes de corrélations d'alarmes comprend la mise en ordre des alarmes en lignes et colonnes.

6. Procédé selon l'une quelconque des revendications précédentes, comprenant en outre :

   le calcul d'une carte de corrélations de processus sur la base de signaux de processus indiquant un état de processus d'un appareil ;
   la fusion de la carte de corrélations d'alarmes et de la carte de corrélations de processus dans une carte de corrélations fusionnée.

7. Procédé selon la revendication 6, comprenant en outre :
   l'obtention de corrélations alarmes-processus à partir de la carte de corrélations fusionnée.

8. Procédé selon l'une quelconque des revendications précédentes, comprenant en outre :
   le regroupement des événements anormaux.

9. Procédé selon l'une quelconque des revendications précédentes, dans lequel la classification des épisodes anormaux est réalisée à l'aide d'un classificateur linéaire.

10. Procédé selon l'une quelconque des revendications précédentes, dans lequel la classification des épisodes anormaux est réalisée à l'aide d'une machine à vecteurs de support.

11. Procédé selon l'une quelconque des revendications précédentes, dans lequel un diagnostic de défaut est consulté en fonction de la classification.

12. Système de commande industriel (200), comprenant

   un module d'alarme (210) configuré pour stocker des alarmes dans un journal d'alarmes (50) ainsi que des informations d'alarme associées aux alarmes, dans lequel l'alarme est un signal binaire,
   une unité de traitement (220) configurée pour

      identifier un épisode anormal d'après le journal d'alarmes (50), dans lequel un épisode anormal correspond à un intervalle dont la fréquence d'activation d'alarmes est égale ou supérieure à un nombre donné d'alarmes dans une période de temps donnée,
      extraire des événements anormaux du journal d'alarmes (50), les événements anormaux étant associés à l'épisode anormal, dans lequel un événement anormal correspond à une séquence d'alarme donnée, et
      calculer à partir des événements anormaux extraits une carte de corrélations d'alarmes décrivant des corrélations entre les événements anormaux extraits ; et

   un classificateur (230) configuré pour classer l'épisode anormal à l'aide de la carte de corrélations d'alarmes, dans lequel
   le calcul de la carte de corrélations d'alarmes comprend l'utilisation d'une mesure de similarité, la mesure de similarité étant au moins une mesure sélectionnée dans le groupe formé par :

      - un indice de similarité de Jaccard ;

- un coefficient d'appariement simple ;
- un coefficient de Dice ;
- un premier coefficient Kulczynski ; et
- un second coefficient Kulczynski.

13. Système de commande industriel selon la revendication 12, dans lequel le classificateur (230) est formé à l'aide de données historiques.

14. Système de commande industriel selon la revendication 12 ou 13, comprenant en outre une interface de réseau pour connecter le système de commande industriel à un réseau de données, le système de commande industriel étant connecté fonctionnement à l'interface de réseau pour au moins réaliser une commande reçue du réseau de donnes et envoyer des informations d'état de dispositif au réseau de données.

Fig. 1

R12
Reactor
Idle

0.9 bar

0.0 l

R11
Reactor
Additives

0.4 bar

1490.0 l

Additives

68.7 °C

53.2 °C

59.9 °C

100

Production throughput:
2:0.Product 3:0.Total

Alarm of a valve

Alarm of a pump

Exhaust valve
Fan
Fan
Fan
Fan
Pump
Pump
Valve
Valve

| 1 | 05 15:25:28 | 70_V11 |
| 1 | 05 15:25:28 | 70_M1 |
| 1 | 05 15:25:28 | 70_M1 |
| 1 | 05 15:25:28 | 70_M2 |
| 1 | 05 15:25:28 | 70_M2 |
| 1 | 05 15:25:28 | 70_P1 |
| 1 | 05 15:25:28 | 70_P1 |
| 1 | 05 15:25:28 | 70_V12 |
| 1 | 05 15:25:28 | 70_V13 |

50

200

Fig. 2

<u>300</u>

310

320

330

340

# Fig. 3

**REFERENCES CITED IN THE DESCRIPTION**

**Patent documents cited in the description**

- EP 3026518 A1

**Non-patent literature cited in the description**

- **CHENG, Y. ; IZADI, I. ; CHEN, T.** Pattern matching of alarm flood sequences by a modified Smith-Waterman algorithm. *Chemical Engineering Research and Design,* 2013, vol. 91 (6), 1085-1094
- **LAI, S. ; CHEN, T.** A method for pattern mining in multiple alarm flood sequences. *Chemical Engineering Research and Design,* 2015
- **HU, W. ; WANG, J. ; CHEN, T.** A local alignment approach to similarity analysis of industrial alarm flood sequences. *Control Engineering Practice,* 2016, vol. 55, 13-25
- **YANG, F. ; SHAH, S. L. ; XIAO, D. ; CHEN, T.** Improved correlation analysis and visualization of industrial alarm data. *ISA Transactions,* 2012, vol. 51, 499-506
- **RODRIGO, V. ; CHIOUA, M. ; HAGGLUND, T. ; HOLLENDER, M.** Causal analysis for alarm flood reduction. *IFAC-PapersOnLine,* 2016, vol. 49 (7), 723-728
- **AHMED, K. ; IZADI, I. ; CHEN, T. ; JOE, D. ; BURTON, T.** Similarity analysis of industrial alarm flood data. *IEEE Transactions on Automation Science and Engineering,* 2013, vol. 10 (2), 452-457
- **KONDAVEETI, S. R. ; IZADI, I. ; SHAH, S. L. ; BLACK, T. ; CHEN, T.** Graphical tools for routine assessment of industrial alarm systems. *Computers and Chemical Engineering,* 2012, vol. 46, 39-47
- **LESOT, M. J. ; RIFQI, M. ; BENHADDA, H.** Similarity measures for binary and numerical data: a survey. *International Journal of Knowledge Engineering and Soft Data Paradigms,* 2009, vol. I (1), 63
- **YANG, Z., WANG, J., & CHEN, T.** Detection of correlated alarms based on similarity coefficients of binary data. *IEEE Transactions on Automation Science and Engineering,* 2013
- **CORTES, C. ; VAPNIK, V.** Support Vector Networks. *Machine Learning,* 1995, vol. 20 (3), 273-297